# EUROPEAN PATENT SPECIFICATION

(11) **EP 0 862 323 B1**
(45) Date of publication and mention of the grant of the patent: **14.06.2006**
(21) Application number: 98103395.4
(22) Date of filing: 26.02.1998
(51) Int. Cl.: H04N 5/225, H04N 5/232

(54) **Camera or camera system capable of rewriting program for camera actions, or accessory device used for the camera**
Kamera oder Kamerasystem mit der Fähigkeit Programme für Kameraaktionen oder für eine von der Kamera benutzte Zubehörvorrichtung zu aktualisieren
Caméra ou système de caméra capable de réécrire un programme pour des actions de caméra ou un dispositif accessoire utilisé par la camera

(30) Priority: 27.02.1997 JP 4324497
(43) Date of publication of application: 02.09.1998
(73) Proprietor: CANON KABUSHIKI KAISHA, Tokyo (JP)
(72) Inventor: Harada, Yoshihito, Ohta-ku, Tokyo (JP)
(74) Representative: TBK-Patent

(56) References cited:
- EP-A- 0 449 530
- EP-A- 0 734 156
- GB-A- 2 289 555
- US-A- 5 565 957
- US-A- 6 104 430
- PATENT ABSTRACTS OF JAPAN vol. 012, no. 089 (E-592), 23 March 1988 & JP 62 224169 A (HITACHI DENSHI LTD), 2 October 1987
- PATENT ABSTRACTS OF JAPAN vol. 1996, no. 08 30 August 1996 -& JP 08 098 124 A (RICOH CO LTD) 12 April 1996

## Description

The present invention relates to a camera system composed of a camera having a program or data stored in a rewritable, nonvolatile memory such as a flash memory, and an accessory device adapted to be connected to the camera, or relates to the camera or the accessory device.

An electronic apparatus such as a single-lens reflex camera system is arranged to meet versatile usages and needs of the user by allowing use of the camera in combination with a system accessory device such as a flash device, a lens unit, a data back cover, etc.

The operation of such a system is smoothened in general by specifying beforehand an interface between the camera and the accessory device and by carrying out communication between the camera and the accessory device in accordance with rules thus specified.

Generally, however, functions of the accessory device of such a camera system tend to be expanded after the camera system is marketed. In a case where the camera system is to be arranged to include an accessory device of a new type having an electronic circuit as well as mechanical parts, it becomes hardly possible to add new functions without modifying a program existing on the side of the camera.

Therefore, after a camera of the above-stated kind is marketed, the camera is apt to become incompatible with an accessory device developed later although the camera is compatible with an accessory device developed concurrently therewith and an accessory device which is a scale-modified version of the concurrently developed accessory device.

In order to make the camera compatible or concordant with an accessory device having a new function and to permit use of the accessory device, it has been necessary to update the version of a ROM of the camera. In addition, prior art document GB 2 289 555 A discloses a device for personal communication, data collection and data processing, and in particular a notebook computer. This hand-held work station has a plurality of units for data communication. The notebook computer comprises a data processing unit which comprises a central processor, an input/output controller, a memory unit in which an operating system and an application program are recorded, and a PCMCIA card slot which is connected to the input/output controller. A camera unit is fitted in a PCMCIA card which is connected to the PCMCIA card slot. The PCMCIA card consists of a camera arrangement which comprises a camera, optics, and an image proceedings unit. The image processing unit comprises a microprocessor and a number of memory units which have nonvolatile memory units such as flash and EPROM units. The functions related to the notebook computer include camera functions to record images as well as to PC interface functions for transferring information to PC applications, as well as means so that the device can be used in the same way as a conventional hand-held telephone.

Document EP 0 734 156 relates to a video camera and its setup method, wherein a certain adjustment can be eliminated or reduced when the picture pickup block using a picture pickup element must be replaced. The video camera consists of an optical head body and a camera body. The picture pickup block of the optical head body is detachably detached to the camera body. The picture pickup block has an EEPROM which stores setup data for setting up the video camera, including data in association with picture pickup elements, such as shading correction data. When the power is turned on, a microcomputer in the camera body reads setup data from the memory ROM, and sets up the video camera by controlling each circuit of the picture pickup block and the camera body. For example, based on shading correction data, setup is performed so that a video signal for which shading correction has been performed is output.

Moreover, prior art documents JP 08 098124 and US-A-6 104 430 disclose a digital electronic still camera which receives an input/output control program through a detachable communication interface card. When the I/O card is inserted into the camera and is connected to the camera control means the kind of I/O card which has been connected to the camera is determined by reading a memory location within the card. Thereafter, a control program which is contained in the I/O card is transferred to the camera and is memorized in a corresponding memory in the camera to perform I/O functions which correspond to the type of the inserted card. Image signals and audio signals can be transmitted between the camera and an external processor, information describing the status of the camera can be transmitted from the camera to the external processor, and commands to control the camera can be transmitted to the camera from the external processor. The memory unit of the camera is arranged to store the control program for controlling the communication between the camera and the processing device and to store an attribute corresponding to the type of communication protocol used for the communication between the camera and the specific processing device. The camera is operated based on the control program transferred to the memory of the camera when the I/O card is detachably inserted. Prior art document EP 0 449 530 A2 discloses a memory medium having a control program memorized therein and an information processing method and a corresponding apparatus, wherein a rewritable memory is provided for storing therein a control program for controlling the operation of the apparatus itself. The control program stored can be renewed by supplementing additional program portions to the present program or by replacing the present program by another program of a newer development state. Accordingly, when a renewed control program is offered the new control program is stored in the memory of the information processing apparatus after having checked in the header information of the present and the new program whether the present program has been renewed. If the program version in the header of the stored present program is greater than that of the new program no modification is carried out. If conversely the program version in the header of the present program is smaller than that of the new program, the present program has to be modified and a data flow is initiated to store the new program. By comparing the program versions the newness of a control program can be discriminated.

It is therefore an object of the present invention to provide a camera which is compatible and concordant with an accessory device having a new function.

According to the present invention this object is accomplished by a camera system, a camera and an accessory as set out in the appended claims.

Further, in a camera system according to the invention, a software of a camera is stored in an electrically rewritable memory such as a flash memory, instead of a mask ROM, and a novel accessory device usable in combination with the camera is arranged to include a modification program for modifying a program of the camera in such a way as to cause the camera to support the accessory device itself. Accordingly, when the novel accessory device is mounted on the camera which has already been marketed and been in use, the program of the camera is modified by the modification program of the accessory device, so that the camera and the accessory device effectively cooperate with each other to provide the user with a new function.

These and further objects and features of the invention will become apparent from the following detailed description of a preferred embodiment thereof taken in connection with the accompanying drawings.

### BRIEF DESCRIPTION OF THE SEVERAL VIEWS OF THE DRAWING

Figs. 1(a) to 1(f) show, by way of example, various combinations of a camera and an accessory device.
Fig. 2 is a block diagram showing a camera system composed of a camera and an accessory device according to an embodiment of the invention.
Figs. 3(a) and 3(b) are flow charts showing the operation of the embodiment of the invention.

### DETAILED DESCRIPTION OF THE INVENTION

Hereinafter, a preferred embodiment of the invention will be described in detail with reference to the drawings.

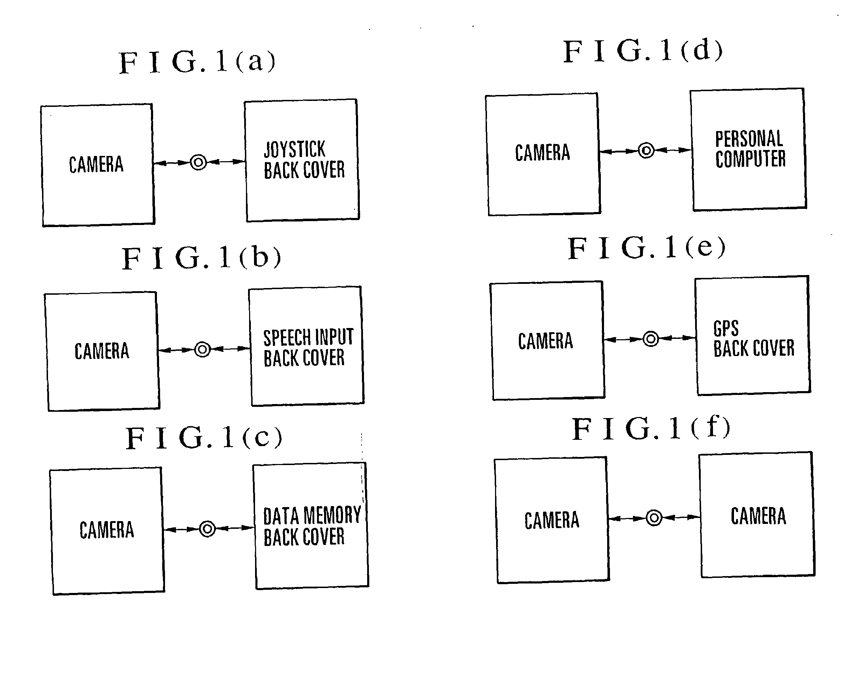

Figs. 1(a) to 1(f) show, by way of example, possible combinations of various accessory devices with a camera serving as an electronic apparatus.

In the combination shown in Fig. 1(a), a camera is connected to a joystick back cover which is arranged to have either prompting buttons or operation rods in two directions X and Y.

Here, it is assumed that when the camera is marketed, there exists only a camera system including the joystick back cover. In this camera system, in order to permit selection of a distance measuring point for automatic focusing (AF) of the camera as desired, a joystick of the joystick back cover is operated to set the distance measuring point to be displayed on a viewfinder. The advantage that a distance measuring point for AF of the camera can be easily set by freely moving the joystick of the joystick back cover can be said to be due to the fact that the joystick back cover has been developed concurrently with the camera.

After the development of the camera system composed of the camera and the joystick back cover, a speech input back cover as shown in Fig. 1(b) is assumed to be developed. However, since the later development of the speech input back cover was not taken into consideration when the camera system shown in Fig. 1(a) was developed, it would be impossible to use the speech input back cover as an accessory device for the camera, because the camera is not arranged to support a communication protocol required by the speech input back cover.

In order to enable the camera to use the speech input back cover as an accessory device therefor, a program of the camera must be revised to include a program which is concordant with the speech input back cover.

It is highly probable that many accessory devices not anticipated when a camera is developed will come to appear according to the advancement of the electronic industry, as in the case of the example given above.

For example, when the degree of integration in semiconductors increases to lower the cost of memories, the camera can be arranged to have a data memory back cover, as shown in Fig. 1(c), which is capable of storing photo-taking data of the camera. Also, the camera can be arranged to have a personal computer interface, as shown in Fig. 1(d), for controlling the camera by a personal computer, for outputting data from the camera, or for revising a program of the camera. Further, the camera can be arranged to have a GPS (global positioning system) back cover, as shown in Fig. 1(e), which is capable of detecting a photo-taking position, as a result of the advancement of an art for processing signals coming from a satellite. Further, the camera can be arranged to be connected to another camera, as shown in Fig. 1(f), so as to permit tandem shooting or copying of a program or data. Incidentally, the above-stated term "back cover" means either a back cover which is arranged to function as an actually openable lid, or a back cover which does not have to be opened but is arranged to be mountable on the rear side of the camera.

As a result of the recent advancement of the art relative to semiconductors, a single-chip microcomputer arranged to include an electrically rewritable, built-in nonvolatile memory, such as a flash memory, has become available. Such microcomputers include, for example, the products of Motorola, Inc. labelled as MC68HC916, MC68HC912, etc.

Use of a microcomputer of the above-stated kind permits an existing program of a camera already delivered to a user to be revised or modified. For example, in Japanese Laid-Open Patent Application No. HEI 7-191364, the existing program of a camera can be revised as necessary by connecting a personal computer to the camera as shown in Fig. 1(d).

Generally, a program which is owned by a personal computer is revised by supplying an OS (operating system) or a utility program through a CD-ROM or the like. When a novel printer or scanner is marketed, a personal computer is provided with a device driver in the form of a recording medium such as a floppy disk or the like for the purpose of supporting the use of such a novel peripheral device.

Further, a system called a plug-in system has been developed to enable a personal computer to support such a novel peripheral device immediately when the novel peripheral device is simply inserted. In the plug-in system, some matters are prearranged, software for device drivers of various kinds and forms is arranged beforehand within the personal computer, and a device driver software is simply installed upon recognition of a novel peripheral device.

It is conceivable that a camera can be made concordant or compatible with a novel accessory device by applying the method of the above-stated plug-in system to the camera. This attempt necessitates the user to take one of two actions. In one action, the camera is brought to some service center (facilities), where the existing program of the camera is revised by setting it with a personal computer in a system as shown in Fig. 1(d). In the other action, the existing program of the camera is revised by using a personal computer owned by the user.

However, the first action of bringing the camera to the service center every time a back cover or the like is purchased is troublesome to the user. The second action is sometimes impossible because a personal computer is not always owned by the user at his or her home.

To solve these problems, according to the embodiment of the invention, when an accessory device having a new function is mounted on a camera equipped with a flash memory, a program for the camera for modifying an action of the camera so as to cause the camera to support the accessory device is transferred as data from the accessory device to the camera, thereby revising the existing program of the camera, so that the new function can be acquired for the user by the use of the accessory device in combination with the camera.

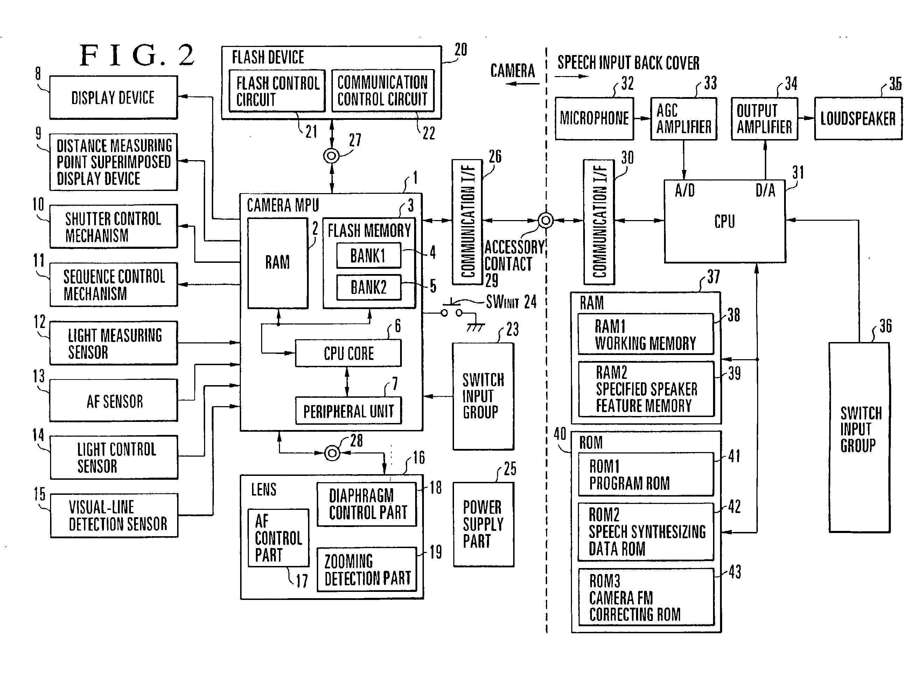

Fig. 2 is a block diagram showing in detail a camera system composed of a camera and an accessory device according to the embodiment of the invention.

In Fig. 2, the camera is shown on the left side of a broken line, and the accessory device which has a new function is shown on the right side of the broken line. In the case of the embodiment, the accessory device is a speech input back cover.

The camera has a camera MPU 1 which serves as the center of all control actions to be performed within the camera. The camera MPU 1 includes a CPU core 6, a RAM 2, a flash memory 3 and a peripheral unit 7. The peripheral unit 7 includes a general-purpose I/O port, a timer, a PWM, an A/D converter, etc. A microcomputer of the kind having a built-in electrically rewritable, nonvolatile memory such as a flash memory, like the microcomputer MC68HC912 cited above, can be provided with some program and data. In the case of the camera MPU 1, therefore, no mask ROM or the like is provided in particular.

The flash memory 3 is provided with a first bank 4 (BANK1) where a flash rewriting program is always stored in general and a second bank 5 (BANK2) where a control program of the camera is mainly stored. Generally, one of the banks must be cleared before loading the flash memory 3 with a new program. Therefore, in the case of the above-stated microcomputer MC68HC912 or the like, there are also arranged a plurality of banks.

The camera is provided with a display device 8 which is arranged to display control values and modes of operation by means of an external liquid crystal display device (LCD) and another liquid crystal display device (LCD) which is disposed inside a viewfinder.

A distance measuring point (field) display device 9 is arranged to show a plurality of distance measuring points (focus detecting fields) in a superimposing manner within the viewfinder. The camera further includes a shutter control mechanism 10, a sequence control mechanism 11 arranged to control mirror up/down moving actions, a shutter charging action and a film transport action, a light measuring sensor 12, an AF sensor 13 having a plurality of distance measuring points (fields), a light control sensor 14, a visual-line detection sensor 15 arranged to detect a distance measuring point (field) to which the visual line of the user is directed.

A lens 16 includes an AF control part 17, a diaphragm control part 18, a zooming detection part 19, etc. The lens 16 is arranged to communicate with the camera (body) through a lens mount contact 28. A flash device 20 includes a flash control circuit 21 and a communication control circuit 22. The flash device 20 is arranged to communicate with the camera (body) through a flash-device accessory shoe contact 27.

A switch input group 23 includes a release button, a light measuring button, etc. A power supply part 25 is arranged within the camera body. A communication I/F (interface) 26 is arranged to permit the camera to communicate with the accessory device through an accessory contact 29.

A switch (SW_{INIT} ) 24 is provided for writing a program into the flash memory 3 at the factory. In the case of the above-stated microcomputer MC68HC912 or the like, a loader for flash writing is sent into the RAM 2 through the communication I/F 26 in a manner called "special boot". With the loader carried out, the program is sent into the flash memory 3 through the communication I/F 26.

After the program is once written into the flash memory 3 in this manner, the loader which is normally retained at the first bank 4 (BANK1) enables the user to rewrite programs for the second bank 5 (BANK2) through the loader using the camera possessed by the user.

In a case where the accessory device having a new function is a speech input back cover which is shown by way of example in Fig 1(b), the speech input back cover is arranged as shown on the right side of the broken line in Fig. 2. The speech input back cover is arranged to be capable of recognizing speeches. For example, the speech input back cover may be used in the following manner.
(i) The user speaks "distance measuring point upward".
(ii) The back cover makes a reply "understood".
(iii) The distance measuring point (field) for
AF of the camera then moves upward by one step.

In the speech input back cover, a CPU 31 is connected to a communication I/F 30 for communication with the camera, a microphone 32 for a speech input, an AGC amplifier 33 for the microphone 32, an output amplifier 34 for a synthesized speech output, and a loudspeaker 35. The AGC amplifier 33 and the output amplifier 34 are connected respectively to A/D and D/A converters disposed within the CPU 31. A switch input group 36 is arranged to include, among others, a switch for learning the voice of a specified speaker, a start switch for obtaining the instruction of the speaker by supplying power to the above-stated amplifiers 33 and 34.

The CPU 31 is provided with a RAM 37 and a ROM 40. The RAM 37 includes a first memory 38 (RAM1) which is a working memory and a second memory 39 (RAM2) which is arranged to store the feature of a specified speaker. The ROM 40 includes a first ROM 41 (ROM1), a second ROM 42 (ROM2) and a third ROM 43 (ROM3). The first ROM 41 is a program ROM which is provided for controlling speech recognition, speech synthesis and communication with the camera. The second ROM 42 is arranged to store data for speech synthesis, and is used also for storing the features of unspecified speakers.

The third ROM 43 is arranged to completely store a program to be sent into the flash memory 3 of the camera MPU 1 for enabling the camera to support main specifications related to "AF distance measuring point change-over by a speech" of the speech input back cover employed as an accessory device having a new function. In other words, the program stored in the third ROM 43 is arranged to cause the camera to carry out the above-stated main specifications, etc., in accordance with data or commands sent from the speech input back cover to the camera when the speech input back cover is employed as the accessory device.

The third ROM 43 (ROM3) is thus arranged to store the program for modifying or revising the flash memory 3 of the camera. Once the revising program is put into the second bank 5 (BANK2) within the flash memory 3 of the camera, the updated version of a program existing in the camera continuously supports the use of the accessory device thereafter.

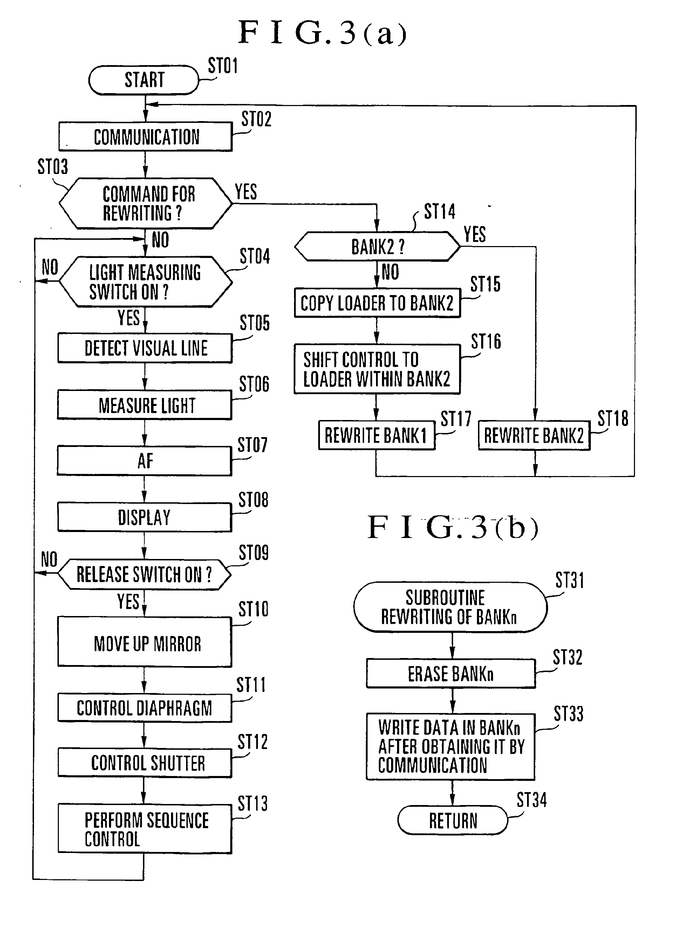

Figs. 3(a) and 3(b) are flow charts showing the operation of the camera system shown in Fig. 2. The flow of operation is defined by a program set within the camera.

Referring to Fig. 3(a), at a step ST01, the flow of operation starts when the back cover, i.e., the accessory device, is mounted on the camera. At a step ST02, the camera and the accessory device communicate with each other. At a step ST03, a check is made to find if the camera has received a rewriting command from the accessory device. If so, the flow proceeds to a step ST14 to have a rewriting program carried out at the step ST14 and subsequent steps.

The rewriting command is issued, for example, in the following case. Assuming that a program which exists in the camera is a version V1 and a program of a ROM which is arranged within the accessory device for the camera is a version V2, the version V1 and the version V2 are read out and compared with each other. If the result of comparison indicates "V1 < V2", i.e., the program of the version V2 includes the program of the version V1, the accessory device cannot be supported without revising (or updating) the existing program of the camera. Therefore, in this case, the existing program of the camera is revised according to the rewriting command.

If the result of comparison is "V1 ≧ V2", i.e., the program of the version V2 does not include the program of the version V1, a check by communication to be made for necessity of revision is not required. In that case, the communication at the step ST02 is no longer required.

Incidentally, the check for necessity of rewriting at the step ST03 may be made either by the camera or by the accessory device. In either case, however, the versions of the respective programs must be validated.

If the rewriting is found not to be necessary at the step ST03, the flow proceeds to a step ST04. At the step ST04, a check is made to find if a light measuring switch which is in a position to turn on when the release button of the camera is pushed to make its first stroke is in its on-state. If so, the flow proceeds to a step ST05. At the step ST05, with the light measuring switch turned on, the visual line of the user (operator) is detected. At a step ST06, a light measuring action is performed. At a step ST07, the distance in an AF area is measured (focus detection) and the focal point of the lens is adjusted. At a step ST08, a shutter speed value TV, an aperture value AV and a distance measuring point (field) are displayed in a superimposed state.

At a step ST09, a check is made to find if a release switch is in its on-state with the release button further pushed to make its second stroke. If not, the flow of operation returns to the step ST04.

The loop of steps mentioned above represents a main routine to be executed when the light measuring switch is pushed. However, in a case where the program for supporting the accessory device is executed by the above-stated program revising system, a program of receiving from the back cover (the accessory device) a command for moving the distance measuring point in one of vertical, horizontal and oblique directions is added to the loop.

If the release switch is found by the check made at the step ST09 to have been turned on, the flow proceeds to a step ST10. At the step ST10, a mirror is moved up. At a step ST11, the diaphragm of the lens is controlled. At a step ST12, the shutter is controlled. At a step ST13, a sequence of actions related to a photo-taking operation including moving the mirror down, charging the shutter, transporting a film, etc., is carried out. After that, the flow returns to the step ST04.

In a case where the rewriting action on the flash memory 3 is found to be necessary at the step ST03, the flow proceeds to the step ST14, as mentioned above. At the step ST14, a check is made to find if the command for the rewriting action is to be executed for the second bank 5 (BANK2) which normally contains a control program of the camera therein. If so, the flow proceeds to a step ST18 to rewrite the second bank 5 (BANK2). Whether the rewriting command is for the first bank 4 or for the second bank 5 is decided according to the contents of the above-stated version V2.

If the rewriting command is found to be for the first bank 4 (BANK1) at the step ST14, the flow proceeds to a step ST15. At the step ST15, a flash rewriting program, i.e., a loader, which is contained in the first bank 4 (BANK1) is copied into the second bank 5 (BANK2). At a step ST16, the flow jumps to delegate control to the loader in the second bank 5 (BANK2). Without the step ST16, the loader program would go astray as a result of the selfdestruction of the working area of the first bank 4 (BANK1). At the next step ST17, the rewriting action is performed on the first bank 4 (BANK1).

Fig. 3(b) is a flow chart showing a subroutine of rewriting a bank n at a step ST31. Assuming that "n" represents 1 or 2, the bank n is erased in its entirety at a step ST32. At a step ST33, a program stored in the ROM 43 (ROM3) of the accessory device is obtained through communication with the accessory device, and the program thus obtained is written into the bank n. Then, at a step ST34, the flow returns to the main routine.

Upon completion of the rewriting action on the first bank 4 (BANK1) or the second bank 5 (BANK2), the flow returns to the step ST02. After completion of rewriting, the program of the camera does not have to be revised any more in the case of the combination of the camera and the accessory device. Therefore, after the return to the step ST02, the steps to be executed are only the step ST04 and subsequent steps.

The back cover accessory device may be arranged to have a plurality of kinds of camera revising programs and to have one of them selected by the user. Further, the revising program may be used for correcting any bug of the program of the camera. The revising program also may be used in aid of an attempt of the user to modify the program of the camera for preparing the camera to have a display operability desired by the user, as in the case of a custom-made function.

Further, in accordance with the invention, a camera arranged as an electronic apparatus and an accessory device may be connected to each other in a wireless manner.

A camera system is arranged such that, when an accessory device having a new function is mounted on the camera of the camera system, a program for carrying out the new function of the accessory device is written into a memory of the camera to enable the camera to carry out the new function of the accessory device.

## Claims

1. A camera system composed of a camera having a rewritable nonvolatile memory for storing information such as program or data and arranged to control an action thereof according to the information stored in the memory, and an accessory device for use in combination with the camera, said accessory device comprising:
an accessory memory which stores program information including a program for controlling the accessory device by the camera and a rewriting program for rewriting a control program of the camera for modifying the action which is to be performed by the camera according to the information stored in the memory of the camera or for adding a new action to the action of the camera; and said camera comprising:
comparing means for comparing a version of the program information stored in the memory of the camera with a version of the program information stored in the accessory memory; and
writing means for writing the program information of said accessory memory into the memory of the camera through communication between the camera and the accessory device so as to modify the action of the camera or to add the new action to the action of the camera, when the version of the program information stored in the accessory memory is newer than the version of the information stored in the memory of the camera;
wherein:
the memory of the camera has a first bank for storing a rewriting program of the camera, and a second bank in which the control program of the camera is stored;
said writing means writes the program information of said accessory memory selectively into said second bank and said first bank or said second bank according to contents of the version of the program information of the accessory memory for rewriting the control program of the camera, and wherein
in case the writing means writes the program information of the accessory memory into the second bank and the first bank, the rewriting program which is contained in the first bank is copied into the second bank and control of the camera is shifted from the first bank to the rewriting program written in the second bank.

2. A camera system according to claim 1, wherein said writing means writes the program information of said accessory memory into the memory of the camera when the program information of said accessory memory is program information which has not been stored in the memory of the camera.

3. A camera system according to claim 1, wherein the communication is conducted by connecting the camera and the accessory device to each other so that the program information of said accessory memory is written into the memory of the camera.

4. A camera system according to claim 1, wherein the program information of said accessory memory is a program for causing the camera to perform a new function of the accessory device upon connection of the accessory device with the camera.

5. A camera system according to claim 1, wherein the memory of the camera is a flash memory, in which a flash memory rewriting loader is contained.

6. A camera having a rewritable nonvolatile memory for storing information such as a program or data and arranged to control an action thereof according to the information stored in the memory and to be usable in combination with an accessory device,
wherein said accessory device is provided with an accessory memory which stores program information including a program for controlling the accessory device by the camera and a rewriting program for rewriting a control program for the camera for modifying an action which is to be performed by said camera according to information stored in the memory of said camera or for adding a new action to the action of said camera,
said camera comprising comparing means for comparing a version of the program information stored in the memory of the camera with a version of the program information stored in the accessory memory, and writing means for writing the program information of the accessory memory into the memory of said camera through communication between said camera and said accessory device so as to modify the action of said camera or to add the new action to the action of said camera, when the version of the program information stored in the accessory memory is newer than the version of the information stored in the memory of the camera;
wherein:
the memory of the camera has a first bank for storing a rewriting program of the camera, and a second bank in which the control program of the camera is stored;
said writing means writes the program information of said accessory memory selectively into said second bank and said first bank or said second bank according to contents of the version of the program information of the accessory memory for rewriting the control program of the camera, and wherein
in case the writing mean writes the program information of the accessory memory into the second bank and the first bank, the rewriting program which is contained in the first bank is copied into the second bank and control of the camera is shifted from the first bank to the rewriting program written in the second bank.

7. A camera according to claim 6, wherein said writing means writes the program information of the accessory memory into the memory of said camera when the program information of the accessory memory is program information which has not been stored in the memory of said camera.

8. A camera according to claim 6, wherein the communication is conducted by connecting said camera and said accessory device to each other so that the program information of the accessory memory is written into the memory of said camera.

9. A camera according to claim 6, wherein the program information of the accessory memory is a program for causing said camera to perform a new function of said accessory device upon connection of said accessory device with said camera.

10. A camera according to claim 6, wherein the memory of said camera is a flash memory, in which a flash memory rewriting loader is contained.

## Patentansprüche

1. Kamerasystem, bestehend aus einer Kamera mit einem überschreibbaren nicht flüchtigen Speicher zum Speichern einer Information wie eines Programms oder von Daten, und die vorgesehen ist zur Speicherung einer Maßnahme der selben entsprechend der in der Speichereinrichtung gespeicherten Information, und einer Zubehöreinrichtung zur Verwendung in Verbindung mit der Kamera, wobei die Zubehöreinrichtung umfasst:
ein Zubehör-Speichereinrichtung zum Speichern einer Programminformation einschließlich eines Programms zur Steuerung der Zubehöreinrichtung durch die Kamera, und eines Neuschreibprogramms zum Neuschreiben eines Steuerungsprogramms der Kamera zum Modifizieren der Maßnahme, die durch die Kamera entsprechend der in der Speichereinrichtung der Kamera gespeicherten Information durchzuführen ist, oder zum Hinzufügen einer neuen Maßnahme zu den Maßnahmen der Kamera, und wobei die Kamera umfasst:
eine Vergleichseinrichtung zum Vergleichen einer Version der in der Speichereinrichtung der Kamera gespeicherten Programminformation mit einer Version des in der Zubehör-Speichereinrichtung gespeicherten Programminformation, und
einer Schreibeinrichtung zum Schreiben der Programminformation der Zubehör-Speichereinrichtung in die Speichereinrichtung der Kamera durch eine Kommunikation zwischen der Kamera und der Zubehöreinrichtung, zum Modifizieren der Maßnahme der Kamera oder zum Hinzufügen der neuen Maßnahme zu den Maßnahmen der Kamera, wenn die Version der in der Zubehör-Speichereinrichtung gespeicherten Programminformation neuer ist als die Version der in der Speichereinrichtung der Kamera gespeicherten Information, wobei
die Speichereinrichtung der Kamera eine erste Bank zum Speichern eines Neuschreibeprogramms der Kamera, und eine zweite Bank aufweist, in der das Steuerungsprogramm der Kamera gespeichert ist,
die Schreibeinrichtung die Programminformation der Zubehör-Speichereinrichtung selektiv in die zweite Bank und die erste Bank oder in die zweite Bank entsprechend dem Inhalt der Version der Programminformation der Zubehör-Speichereinrichtung zum Neuschreiben des Steuerungsprogramms der Kamera schreibt, und wobei
in dem Fall, dass die Schreibeinrichtung die Programminformation der Zubehör-Speichereinrichtung in die zweite Bank und die erste Bank schreibt, das neue Schreibprogramm, das sich in der ersten Bank befindet, in die zweite Bank kopiert wird, und die Steuerung der Kamera von der ersten Bank zu dem Neuschreibprogramm umgeschaltet wird, das in die zweite Bank geschrieben ist.

2. Kamerasystem nach Anspruch 1, wobei die Schreibeinrichtung die Programminformation der Zubehör-Speichereinrichtung in die Speichereinrichtung der Kamera schreibt, wenn die Programminformation der Zubehör-Speichereinrichtung eine Programminformation ist, die nicht in der Speichereinrichtung der Kamera gespeichert ist.

3. Kamerasystem nach Anspruch 1, wobei die Kommunikation zur Verbindung der Kamera und der Zubehöreinrichtung miteinander in der Weise durchgeführt wird, dass die Programminformation der Zubehör-Speichereinrichtung in die Speichereinrichtung der Kamera geschrieben wird.

4. Kamerasystem nach Anspruch 1, wobei die Programminformation der Zubehör-Speichereinrichtung eine Programminformation darstellt zum Veranlassen der Kamera zur Durchführung einer neuen Funktion der Zubehöreinrichtung nach Verbinden der Zubehöreinrichtung mit der Kamera.

5. Kamerasystem nach Anspruch 1, wobei die Speichereinrichtung der Kamera ein Flashspeicher ist, in dem ein Flashspeicher-Neuschreibe-Loader enthalten ist.

6. Kamera mit einer überschreibbaren nicht flüchtigen Speichereinrichtung zum Speichern einer Information wie eines Programms oder von Daten, und die vorgesehen ist zur Steuerung einer Maßnahme derselben gemäß der in der Speichereinrichtung gespeicherten Information und die in Kombination mit einer Zubehöreinrichtung zu Verwenden ist,
wobei die Zubehöreinrichtung eine Zubehör-Speichereinrichtung aufweist zum Speichern einer Programminformation einschließlich eines Programms zum Steuern der Zubehöreinrichtung mittels der Kamera und eines Neuschreibprogramms zum Neuschreiben eines Steuerungsprogramms für die Kamera zum Modifizieren einer durch die Kamera entsprechend der in der Speichereinrichtung der Kamera gespeicherten Information durchzuführenden Maßnahme und zum Hinzufügen einer neuen Maßnahme zu den Maßnahmen der Kamera,
wobei die Kamera eine Vergleichseinrichtung zum Vergleichen einer Version der in der Speichereinrichtung der Kamera gespeicherten Programminformation mit einer Version der in der Zubehör-Speichereinrichtung gespeicherten Programminformation, so wie eine Schreibeinrichtung aufweist zum Schreiben der Programminformation der Zubehör-Speichereinrichtung in die Speichereinrichtung der Kamera mittels einer Kommunikation zwischen der Kamera und der Zubehöreinrichtung zum Modifizieren der Maßnahme der Kamera oder zum Hinzufügen der neuen Maßnahme zu den Maßnahmen der Kamera, wenn die Version der in der Zubehör-Speichereinrichtung gespeicherten Programminformation neuer als die Version der in der Speichereinrichtung der Kamera gespeicherten Information ist, wobei
die Speichereinrichtung der Kamera eine erste Bank zum Speichern eines Neuschreibeprogramms der Kamera, und eine zweite Bank aufweist, in der das Steuerungsprogramm der Kamera gespeichert ist,
die Schreibeinrichtung die Programminformation der Zubehör-Speichereinrichtung selektiv in die zweite Bank und die erste Bank oder in die zweite Bank entsprechend dem Inhalt der Version der Programminformation der Zubehör-Speichereinrichtung zum Neuschreiben des Steuerungsprogramms der Kamera schreibt, und wobei
in dem Fall, dass die Schreibeinrichtung die Programminformation der Zubehör-Speichereinrichtung in die zweite Bank und die erste Bank schreibt, das neue Schreibprogramm, das sich in der ersten Bank befindet, in die zweite Bank kopiert wird, und die Steuerung der Kamera von der ersten Bank zu dem Neuschreibprogramm umgeschaltet wird, das in die zweite Bank geschrieben ist.

7. Kamera nach Anspruch 6, wobei die Schreibeinrichtung die Programminformation der Zubehör-Speichereinrichtung in die Speichereinrichtung der Kamera schreibt, wenn die Programminformation der Zubehör-Speichereinrichtung eine Programminformation ist, die nicht in der Speichereinrichtung der Kamera gespeichert ist.

8. Kamera nach Anspruch 6, wobei die Kommunikation durchgeführt wird durch Verbinden der Kamera und der Zubehöreinrichtung miteinander, sodass die Programminformation der Zubehör-Speichereinrichtung in die Speichereinrichtung der Kamera gespeichert wird.

9. Kamera nach Anspruch 6, wobei die Programminformation der Zubehör-Speichereinrichtung ein Programm ist zum Veranlassen der Kamera zur Durchführung einer neuen Funktion der Zubehöreinrichtung nach einer Verbindung der Zubehöreinrichtung mit der Kamera.

10. Kamera nach Anspruch 6, wobei die Speichereinrichtung der Kamera ein Flashspeicher ist, in dem ein Flashspeicher-Neuschreibe-Loader enthalten ist.

## Revendications

1. Système d'appareil de prise de vues constitué d'un appareil de prise de vues comportant une mémoire non volatile réinscriptible destinée à mémoriser des informations telles qu'un programme ou des données et agencée pour commander une action de celui-ci conformément aux informations mémorisées dans la mémoire, et d'un dispositif accessoire en vue d'une utilisation combinée avec l'appareil de prise de vues, ledit dispositif accessoire comprenant :
une mémoire d'accessoire qui mémorise des informations de programme comprenant un programme destiné à commander le dispositif accessoire par l'appareil de prise de vues et un programme de réécriture destiné à réécrire un programme de commande de l'appareil de prise de vues afin de modifier l'action qui doit être exécutée par l'appareil de prise de vues conformément aux informations mémorisées dans la mémoire de l'appareil de prise de vues ou afin d'ajouter une nouvelle action à l'action de l'appareil de prise de vues, et ledit appareil de prise de vues comprenant :
un moyen de comparaison destiné à comparer une version des informations de programme mémorisées dans la mémoire de l'appareil de prise de vues à une version des informations de programme mémorisées dans la mémoire d'accessoire, et
un moyen d'écriture destiné à écrire les informations de programme de ladite mémoire d'accessoire dans la mémoire de l'appareil de prise de vues par l'intermédiaire d'une communication entre l'appareil de prise de vues et le dispositif accessoire de façon à modifier l'action de l'appareil de prise de vues ou à ajouter la nouvelle action à l'action de l'appareil de prise de vues, lorsque la version des informations de programme mémorisées dans la mémoire d'accessoire est plus récente que la version des informations mémorisées dans la mémoire de l'appareil de prise de vues,
où :
la mémoire de l'appareil de prise de vues comporte un premier bloc destiné à mémoriser un programme de réécriture de l'appareil de prise de vues, et un second bloc dans lequel le programme de commande de l'appareil de prise de vues est mémorisé,
ledit moyen d'écriture écrit les informations de programme de ladite mémoire d'accessoire sélectivement dans ledit second bloc et ledit premier bloc ou ledit second bloc conformément au contenu de la version des informations de programme de la mémoire d'accessoire afin de réécrire le programme de commande de l'appareil de prise de vues, et où
dans le cas où le moyen d'écriture écrit les informations de programme de la mémoire d'accessoire dans le second bloc et le premier bloc, le programme de réécriture qui est contenu dans le premier bloc est copié dans le second bloc et la commande de l'appareil de prise de vues passe du premier bloc au programme de réécriture écrit dans le second bloc.

2. Système d'appareil de prise de vues selon la revendication 1, dans lequel ledit moyen d'écriture écrit les informations de programme de ladite mémoire d'accessoire dans la mémoire de l'appareil de prise de vues lorsque les informations de programme de ladite mémoire d'accessoire sont des informations de programme qui n'ont pas été mémorisées dans la mémoire de l'appareil de prise de vues.

3. Système d'appareil de prise de vues selon la revendication 1, dans lequel la communication est exécutée en reliant l'appareil de prise de vues et le dispositif accessoire l'un à l'autre de sorte que les informations de programme de ladite mémoire d'accessoire sont écrites dans la mémoire de l'appareil de prise de vues.

4. Système d'appareil de prise de vues selon la revendication 1, dans lequel les informations de programme de ladite mémoire d'accessoire constituent un programme destiné à amener l'appareil de prise de vues à exécuter une nouvelle fonction du dispositif accessoire lors de la connexion du dispositif accessoire avec l'appareil de prise de vues.

5. Système d'appareil de prise de vues selon la revendication 1, dans lequel la mémoire de l'appareil de prise de vues est une mémoire flash, dans laquelle est contenu un programme de chargement de réécriture dans une mémoire flash.

6. Appareil de prise de vues comportant une mémoire non volatile réinscriptible destinée à mémoriser des informations telles qu'un programme ou des données et agencée pour commander une action de celui-ci conformément aux informations mémorisées dans la mémoire et pouvant être utilisé en combinaison avec un dispositif accessoire,
où ledit dispositif accessoire est muni d'une mémoire d'accessoire qui mémorise les informations de programme comprenant un programme destiné à commander le dispositif accessoire par l'appareil de prise de vues et un programme de réécriture destiné à réécrire un programme de commande pour l'appareil de prise de vues afin de modifier une action qui doit être exécutée par ledit appareil de prise de vues conformément aux informations mémorisées dans la mémoire dudit appareil de prise de vues ou afin d'ajouter une nouvelle action à l'action dudit appareil de prise de vues,
ledit appareil de prise de vues comprenant un moyen de comparaison destiné à comparer une version des informations de programme mémorisées dans la mémoire de l'appareil de prise de vues à une version des informations de programme mémorisées dans la mémoire d'accessoire, et un moyen d'écriture destiné à écrire les informations de programme de la mémoire d'accessoire dans la mémoire dudit appareil de prise de vues par l'intermédiaire d'une communication entre ledit appareil de prise de vues et ledit dispositif accessoire de façon à modifier l'action dudit appareil de prise de vues ou à ajouter la nouvelle action à l'action dudit appareil de prise de vues, lorsque la version des informations de programme mémorisées dans la mémoire d'accessoire est plus récente que la version des informations mémorisées dans la mémoire de l'appareil de prise de vues,
où :
la mémoire de l'appareil de prise de vues comporte un premier bloc destiné à mémoriser un programme de réécriture de l'appareil de prise de vues, et un second bloc dans lequel le programme de commande de l'appareil de prise de vues est mémorisé,
ledit moyen d'écriture écrit les informations de programme de ladite mémoire d'accessoire sélectivement dans ledit second bloc et ledit premier bloc ou ledit second bloc conformément au contenu de la version des informations de programme de la mémoire d'accessoire afin de réécrire le programme de commande de l'appareil de prise de vues, et où
dans le cas où le moyen d'écriture écrit les informations de programme de la mémoire d'accessoire dans le second bloc et le premier bloc, le programme de réécriture qui est contenu dans le premier bloc est copié dans le second bloc et la commande de l'appareil de prise de vues passe du premier bloc au programme de réécriture écrit dans le second bloc.

7. Appareil de prise de vues selon la revendication 6, dans lequel ledit moyen d'écriture écrit les informations de programme de la mémoire d'accessoire dans la mémoire dudit appareil de prise de vues lorsque les informations de programme de la mémoire d'accessoire constituent des informations de programme qui n'ont pas été mémorisées dans la mémoire dudit appareil de prise de vues.

8. Appareil de prise de vues selon la revendication 6, dans lequel la communication est exécutée en reliant ledit appareil de prise de vues et ledit dispositif accessoire l'un à l'autre de sorte que les informations de programme de la mémoire d'accessoire sont écrites dans la mémoire dudit appareil de prise de vues.

9. Appareil de prise de vues selon la revendication 6, dans lequel les informations de programme de la mémoire d'accessoire constituent un programme destiné à amener ledit appareil de prise de vues à exécuter une nouvelle fonction dudit dispositif accessoire lors de la connexion dudit dispositif accessoire avec ledit appareil de prise de vues.

10. Appareil de prise de vues selon la revendication 6, dans lequel la mémoire dudit appareil de prise de vues est une mémoire flash, dans laquelle est contenu un programme de chargement de réécriture dans une mémoire flash.
